# EUROPEAN PATENT APPLICATION

(11) **EP 0 776 127 A2**
(43) Date of publication of application: **28.05.1997**
(21) Application number: 96118378.7
(22) Date of filing: 15.11.1996
(51) Int. Cl.: H04N 5/44

(54) **A video data transmitting method and a receiving apparatus therefor**

(30) Priority: 24.11.1995 JP 305502/95
(71) Applicant: HITACHI, LTD., Chiyoda-ku, Tokyo 101 (JP)
(72) Inventor: Abe, Hiroya, Omiya-shi, Saitama-ken 331 (JP); Aizawa, Iwao, Yokohama-shi, Kanagawa-ken (JP)
(74) Representative: Altenburg, Udo, Dipl.-Phys.

(57) **Abstract**

In a transmitter side is are provided a means for transmitting a story composed of plural interchangeable scenes with adding identifying signals for the respective scenes, by use of digital broadcasting or by use of medium such as CD-ROM as transmitting means, for image information including video and/or audio signal(s).
While, in a receiving apparatus are provided a plurality of tuners 12 to 15 or scene selecting means constructed with a switch SW 9, or a CD-ROM player, and demodulator circuit 16 to 18, a micro computer forming a data selection controller 9 for controlling the selection of the tuners or scene selection, a key board 7 as a part of user interface, a CRT 6 as a display means, etc., wherein the scenes are changed by using the identification signals, thereby the story constructed with a series scenes being made changeable at user's option.

## Description

### BACKGROUND OF THE INVENTION

### FIELD OF THE INVENTION

The present invention relates to a data transmitting method of image information and a receiving apparatus therefor, and in particular to such the receiving apparatus in which a desired scene can be selected and received among plural scenery contained in the image information, thereby the story being changeable.

### DESCRIPTION OF THE RELATED ART

According to a conventional broadcasting method, a receiver can only select and receive a program sent from various broadcasting stations, and a people can enjoy only one story. For instance, for the peoples desiring that they wish to enjoy different stories on a same drama, such an attempt has been made that two broadcasting stations made different stories on the same cast and broadcasted them respectively at the same time, and a receiver could enjoy watching and hearing the drama by changing his channel to his desire. However, the stories which can be made for the purpose were limited, and it was difficult to make the stories freely. It was also troublesome for the audiences to change over the channels when he wish to change the story.

While, upon appearance of a personal computer which can treat with moving pictures, it becomes possible to select and reproduce the scenes sequentially, using such as a CD-ROM in which various moving pictures have been already memorized or stored.

However, according to such the means for providing the information of the moving pictures, i.e., the CD-ROM, since the data amount of the moving pictures is limited by the capacity of the medium, the number of scenes or reproduction time for each scene is not enough.

### SUMMARY OF THE INVENTION

As a means for extending the amount of information, there is a method for receiving the moving picture data by using a communication means, recently represented by a so-called INTERNET. However, because of the capacity of the transmission line thereof, the time for communication increases to be huge, and accompanying it's cost as communication fee very much therewith.

The object of the present invention, therefore, is to provide a data transmitting method of image information containing plural scenery therein, and a receiving apparatus for receiving it, by which a user is able to selectively receive a scene at his option among various programs, thereby to make stories freely changeable. Hereinafter, in general, the scene is constructed with a plurality of picture flames or fields, and the story is composed of a series of scenes.

For accomplishing the object mentioned above, according to the present invention, digital broadcasting is adopted as a means for transmitting the image information including video and audio signals, and is provided at the transmitter side a means for transmitting a program made of plural scenery by respective scenes of thereof, with adding an identifying signal thereto. Regarding the digital broadcasting, the detailed description will be omitted since it was described in detail in NIKKEI ELECTRONICS, No. 645, September 25, 1995.

At the receiver side, is provided a receiving means comprising: a software for providing a user interface for previously pointing a program and broadcasting time of each scene thereof and information including channel number, and for indicating the scene selection to the user, and an application software including a control software for controlling a tuner so as to receive the scenes of a selected channel, a personal computer for processing according to the above application software, a tuner, and a modulator circuit.

The user will select the scene in compliance with operation instruction by the application software, then a control signal is produced so as to control the receiving portion to receive the signal of the scenes selected by using the program information and the scenery information. Therefore, the user can operate it by only selecting the scene which he wish to receive, regardless of the channel of the broadcasting signal and time. Since image information including the moving picture or video and /or audio information is transmitted through the broadcasting, there is no limitation in the amount of the information of the program and the respective scenes thereof, then fulfillment of the contents can be easily achieved.

### BRIEF DESCRIPTION OF DRAWAING(S)

Fig. 1 is a block diagram showing the construction of a first embodiment of the present invention;
Fig. 2 is also a block diagram for explanation of the function of the first embodiment of the present invention;
Fig. 3 is a drawing which shows an example of transmitted signals which are used in the first embodiment of the present invention;
Fig. 4 is a drawing for explaining the operation of the first embodiment of the present invention;
Fig. 5 is a block diagram showing the construction of a second embodiment of the present invention;
Fig. 6 is a drawing which shows an example of transmitted signals which are used in the second embodiment of the present invention;
Fig. 7 is a drawing which shows an example of transmitted signals which are used in the third embodiment of the present invention;
Fig. 8 is a block diagram showing the construction of a fourth embodiment of the present invention;
Fig. 9 is a drawing which shows an example of transmitted signals which are used in the fifth embodiment of the present invention;
Fig. 10 is a block diagram showing the construction of a fifth embodiment of the present invention;
Fig. 11 is a drawing which shows an example of transmitted signals which are used in the sixth embodiment of the present invention;
Fig. 12 is a block diagram showing the construction of a seventh embodiment of the present invention;
Fig. 13 is also a block diagram for explanation of the function of the seventh embodiment of the present invention; and
Fig. 14 is a block diagram showing the construction of a eighth embodiment of the present invention

The invention will be more fully comprehensive by the following detailed description of preferred embodiments.

### DETAILED DESCRIPTION OF PREFERRED EMBODIMENT(S)

Hereinafter, embodiments according to the present invention will be fully explained by referring to the attached drawings.

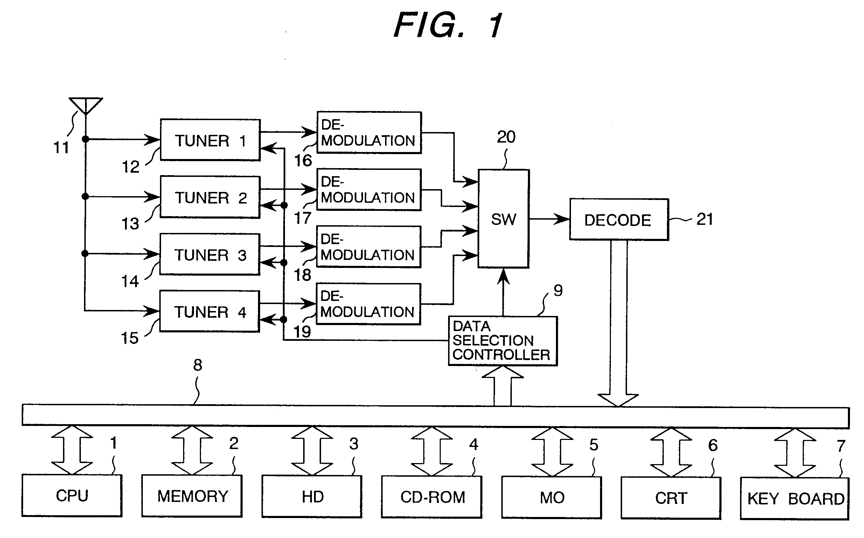

Now, referring to Fig. 1, as a first embodiment of the present invention, a receiver includes a CPU (a central processing unit) 1, a memory 2, a hard disk 3, a CD-ROM driver 4, a memory device of large capacity, such as a magneto-optical (MO) disk driver 5, a display 6 , such as of a monitor using a CRT (Cathode Ray Tube), a key-board 7 and a bus 8 for transmitting data and control signals among those devices mentioned above, thereby so-called a personal computer is constructed therewith. However, construction of each element should not limited to that mentioned above, and it can be replaced with other means as far as the function or purpose thereof is the same. For instance, so-called a floppy disk driver can be replaced with the CD-ROM mentioned above, and a mouse with the key-board.

Further, in Fig. 1, the reference numeral 11 denotes an antenna, numerals 12 to 15 tuners, and numerals 16 to 19 demodulators, which demodulate the signals of respective channels selected with the tuners 12 to 15. And, the reference numeral 20 denotes a switch for selecting one demodulated signal among plural demodulated signals, and numeral 21 a decoder circuit for multiplying a coded signal. As a coding method for it, for example, a EPEG-1 (Moving Picture Experts Group Phase 1), and/or EPEG-2 (Moving Picture Experts Group Phase 2) can be utilized. The reference numeral 9 indicates a data selection controller for controlling the selection channel SW20 for the respective tuners 12 to 15.

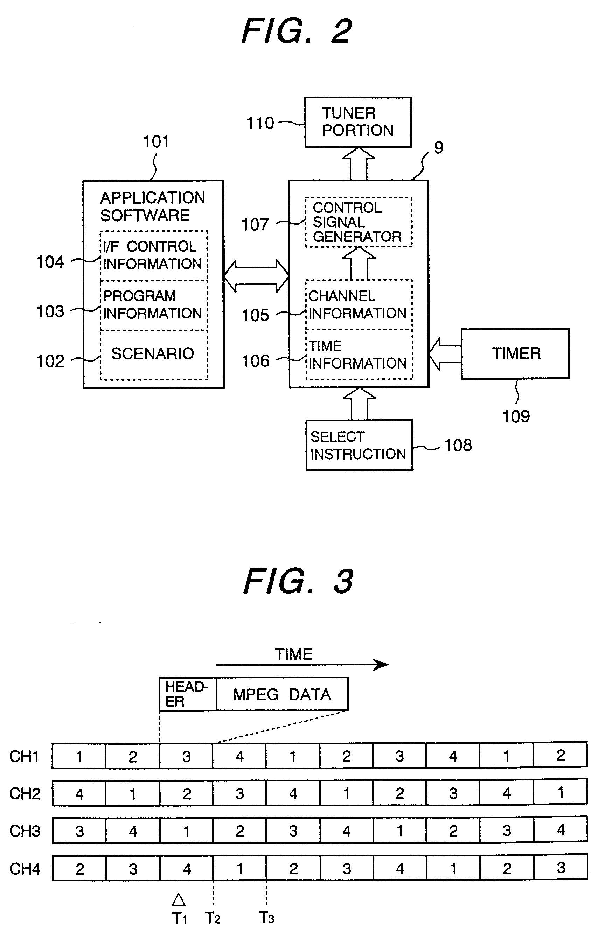

The operation of the embodiment of the construction mentioned above will be explained by referring to Fig. 2. Here, an application software 101 is provided with such as the CD-ROM 4, and in the software are contained a scenario information 102, an information 103 of the program to be received, and an interface information. An example of the time tables of programs which are transmitted is shown in Fig. 3. CH1 to CH4 denote channels for transmission, and the numerals 1 to 4 the scene numbers of a program. In this example, a program is composed of four scenes. Those CH1 to CH4 are broadcasted simultaneously, differing in the sequential order thereof. Each of those has respective header portion at it's head, in which a respective identifying signal for use in scene selection is included.

For purpose of explanation of the operation, the program and the construction of scenes are assumed as follows:
Program (program information): growing process of a flower.
Scene 1: From seeding to budding.
Scene 2: Growing and blooming.
Scene 3: Fruiting.
Scene 4: Death.
Scenario: Asking the operator of whether much or less of care during the each step of growing processes, and selecting the growing process depending on it.

The scenario information 102 includes information of construction of the scene, of selective choice for the scenes, etc. The program information 103 includes information of the time on which the program is broadcasted and of channels to be broadcasted.

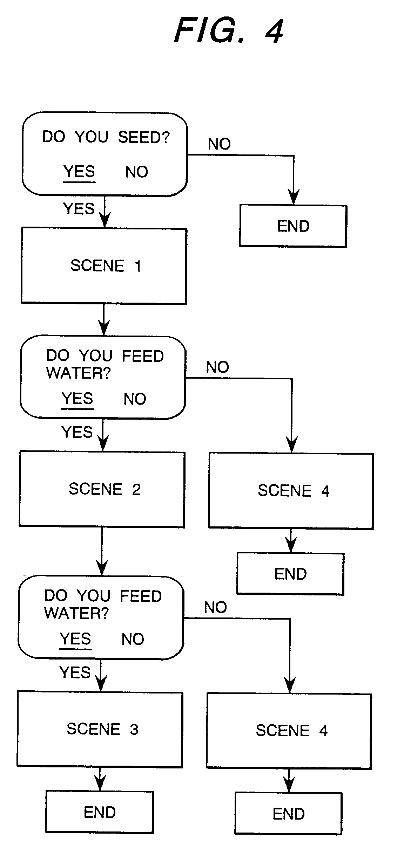

The user selects the scene at his desire in compliance with an operation guidance from the scenario information 102. An example of this will be shown in Fig. 4. The portion of the picture which is encircled by a curved line is the picture of asking the user of selection on the scenario, and scenes are automatically selected in accordance with the select instruction which is input through the key-board 7. Alternatively, it is also possible to select the scene which is desired from a displayed list of the scenes.

The reference numeral 9 in Fig. 2 shows an example of a data selection controller, in which a control signal for the tuners is produced in accordance with the select instruction 108 of the scene from the key-board 7. At that time, the channel and the time on which the desired scene will be broadcasted are searched in accordance with the select instruction 108. The current time is measured by use of the timer 109. After the determination of the channel and the time, the control signal is generated in the control signal generator 107 in accordance with the interface control data for controlling the tuner 110, which is contained in the application software.

For example, in case that the scene 1 is selected at the time indicated by T1 on Fig. 3, the image data transferred on the CH 1 which channel is selected in compliance with the program information 103 and during the time duration from the time T2 to the time T3, is received and displayed on the CRT after the decoding process thereof. In case that the received image information is recorded, it is recorded in the MO disk driven by the MO disk driver 5.

According to the present embodiment, it is possible to automatically and select and reproduce the arbitrary scene, and also to freely access to the data of great amount of capacity. In the above explanation, as an example is illustrated the case in that the program composed of four scenes is transmitted by using four channels. However, the present invention, of course, should not be restricted only to the above, and it is also applicable to other programs having the number of channels and the number of scenes at random.

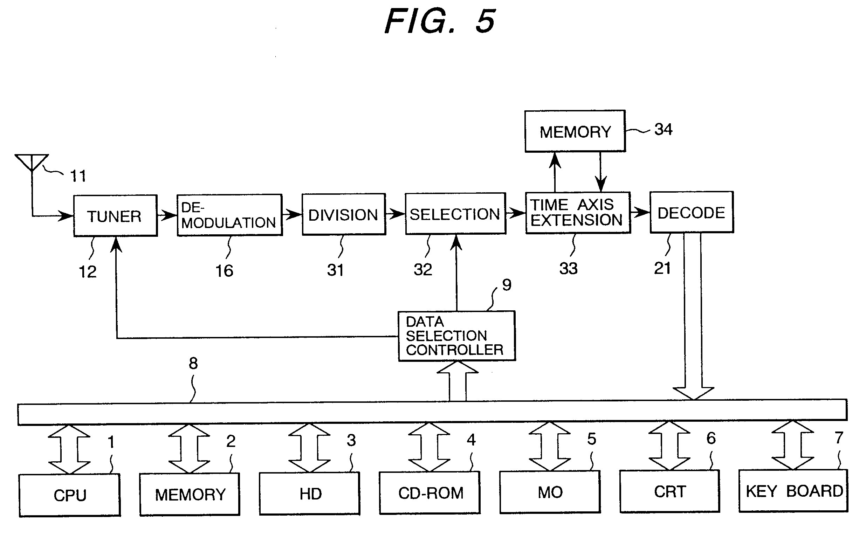

Next, the second embodiment of the present invention will be given hereinafter. In the first embodiment previously mentioned, the program is transmitted through a plurality of channels. However, according to the present embodiment, a plurality of programs are transmitted through only one channel by multiplying them on the time axis, thereby, utilizing the transmission band area effectively as well as aiming to lower the cost by decreasing the number of the tuners at the receiver side. In Fig. 5, there are illustrated a circuit 31 for dividing the signal multiplied on the time axis, a selection circuit 32 for selecting a desired signal from the divided signals, a circuit 33 for extending on the time axis the data selected by the selection circuit 32, and a memory 34 for use of the extending process on the time axis.

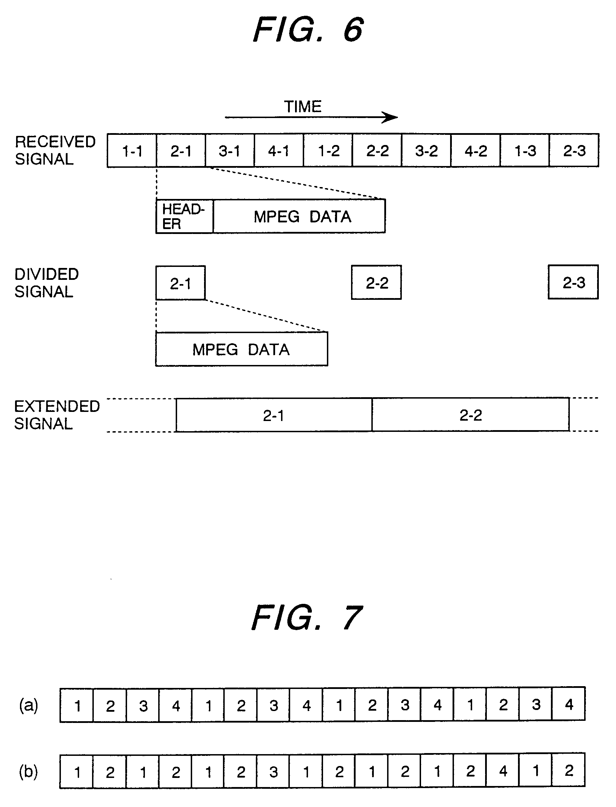

The operation of the present embodiment will be explained by referring to the timing chart shown in Fig. 6. In Fig. 6, each frame denotes a block of an image data including picture (video) and/or audio data, and the reference numerals of the scene number and sequential order of the data. For example, "2-1" in the drawing indicates a first data of the scene 2. The operation of the user is similar to that of the first embodiment mentioned above. For instance, in case that the scene 2 is selected by operation, a group or a block of data of the scene 2 is selected and divided from the signal train multiplied. In this time, only a portion of MPEG data is extracted by removing the data of the header portion. The divided signal is intermittent one as shown in the drawing, however, a continuous signal can be obtained by extending it on the time axis. The extension on the time axis is performed by writing the received data into the memory 34 with the clock signal reproduced and then reading out them therefrom with a clock signal depending on a frequency of the ratio of compression on the time axis, for example 1/4 if the compression ration is 4.

According to the embodiment mentioned above, a plurality of programs can be transmitted through only one channel, and an arbitrary scene can be automatically selected to be reproduced.

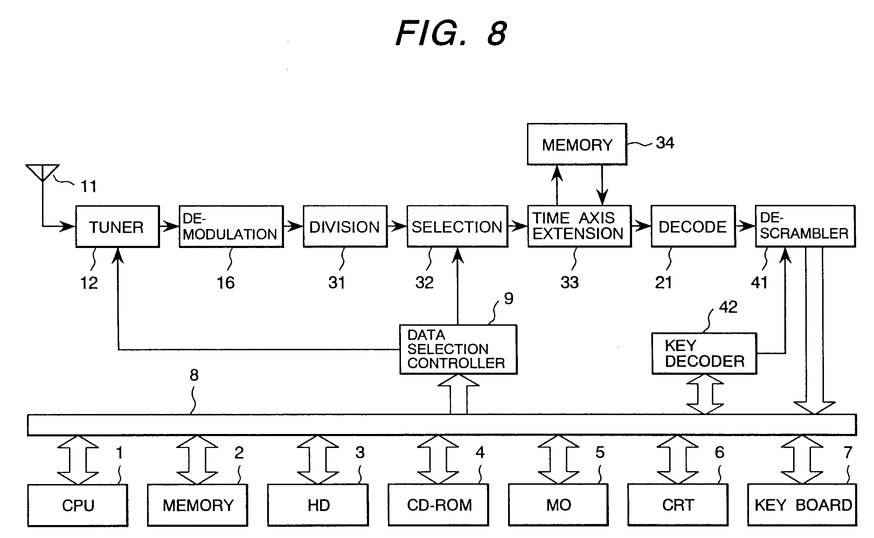

Moreover, the third embodiment of the present invention will be explained hereinafter. In the first embodiment showing a system, which selects the desired scene to receive from the plurality of channels, a waiting time will be resulted during the time period of transferring the desired scenes, in particular if the number of the scenes is big or if the respective scenes are long. Therefore, according to the present embodiment, weight is given to the respective ratio (frequency) of those scenes depending on possibility of being selected. An example is shown in Fig. 7. Fig. 7 (a) shows a case, in which every scene is transferred equally at an average speed. Fig. 7 (b) shows another case wherein the scene 1 and the scene 2 have high frequencies because of their high possibility of being selected while the scene 3 and the scene 4 have low frequencies because of their low possibility of being selected. In this way, the wait time at average can be reduced by giving the weight in the broadcasting frequency for respective scene.

Furthermore, a fourth embodiment of the present invention will be explained hereinafter. In a conventional pay broadcasting system, only contractors can receive the signal by using so-called scramble at the transmitter side and a decoding key at the receiver side. The decoding key is transmitted by multiplying it on the signal from the transmitter side depending on the condition of the contract and of payment by the contractor. Such the system as mentioned has no problem only for the conventional broadcasting. However, when applying it to the system according to the present invention, wherein the information directed to specific users is transmitted therethrough, other operations or works will be necessary, including an anew contract for respective programs, generation of the key, and the transfer of the key, and management thereof will be also difficult to do. According to the present embodiment, the key was already contained in the medium, such as the CD-ROM, for supplying the scenarios and the program information to the users, and a selling price of the medium per se contains the fee or toll for receiving. The construction of the present embodiment is shown in Fig. 8. According to the present embodiment, a function for decoding the scramble is provided in addition to the previous second embodiment shown in Fig. 5. In the drawing, a reference numeral 41 denotes a circuit for decoding the scramble, a descrambler, and numeral 42 a key decord circuit for reading-out from the application software and composing (or decoding) the key signal for descrambling. The descrambler circuit 41 initiates the descrambling process only when receiving the proper key signal. In the construction of the present embodiment, the signal is transmitted by scrambling the original picture and compressing it in addition thereto by the means of such the MPEG, etc., and at the receiver side, the descramble is carried out after completing the decoding process according to the MPEG. However, the sequential position of the scramble process in the signal processing should not be limited to the above described, and it is also possible to construct in such that the scramble process is imposed on the compressed signal of the MPEG signal. Further, it is also possible to apply the similar descrambling function to the construction of the first embodiment shown in Fig. 1.

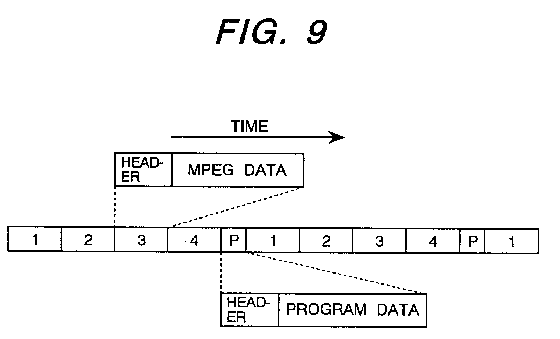

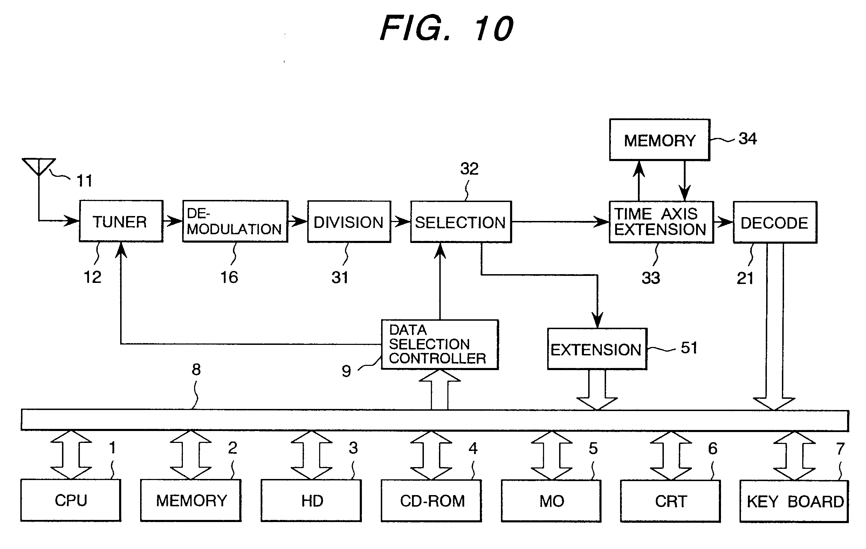

Furthermore, the fifth embodiment according to the present invention will be explained hereinafter. In those embodiments shown in Fig. 1 through Fig. 4 mentioned above, in which construction thereof the application software is supplied from the medium, such as the CD-ROM, etc., however, the application software, as well as the program, is also supplied through the broadcasting in the same manner. Fig. 9 shows an example of a transmitted signal used in the present embodiment. According to the present embodiment, a program data indicated by P in the drawing is inserted between the picture or video information (scenes 1 through 4). For the program data, as well as the picture data, a header portion is provided at the top of the series of data train, in which is included a signal for use of identification thereof. The program data is compressed for shorting the transmission time depending necessity thereof. As a method of compression, for instance, a Huffmann coding, etc. is utilized herewith, but it should not be restricted to a specific method. Alternatively, the signal can be transmitted as it is without compression. The reference numeral 51 in Fig. 10 shows a process of extending the compressed program data. The other elements shown therein with the same numeral references are the same to those explained previously, therefore explanation thereof in detail will not be given herewith.

When receiving the signal, the divider circuit 31 and the selection circuit 32 detect the identification signal in the header portion thereof and extract the program portion therefrom. If the data is transmitted after compression processing, it is extended by the extending process 51 and stored in the memory 2. At the time when the program is stored, then the application software is executed. The operations and the functions thereafter are similar to those of previously mentioned.

According to the present embodiment, since the application software as well as the picture information is also transmitted, renewal of the application software can be achieved easily, and it has advantage that the change of the program including the broadcasting time thereof can performed with ease.

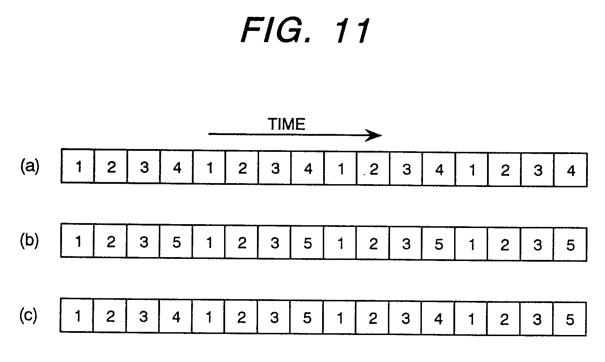

Next, the sixth embodiment according to the present invention will be given hereinafter. In those embodiments mentioned above, the data is so constructed the plural scenes are transmitted repeatedly. However, according to the present embodiment, the scene construction is made changeable. An example of such the data is shown in Fig. 11. In particular, Fig. 11 (a) shows a case where combination of the same scenes is transmitted repeatedly according to the embodiments mentioned above. Fig. 11 (b) shows an example when the scene 4 is changed to the scene 5 of Fig. 11(a). For example, transmitting the data changing over the scenes shown in Fig. 11 (a) and Fig. 11 (b) day by day, the receiver can enjoy various scenes without changing the application software, if the broadcasting time is the same. Fig. 11 (c) shows another example applying the present invention. Here, the scene 4 and the scene 5 are inserted one another. And, with this example, the user can enjoy different scenes depending on the select timing thereof even if the same scenes are selected. Alternatively, it is also possible to exchange all the scenes by the day. According to the conventional method for supplying the picture information through the medium such as the CD-ROM, etc., another medium must be newly bought in order to change the contents of the picture information, however advantageously it is enough to change the contents of the picture information at the receiver side according to the present embodiment.

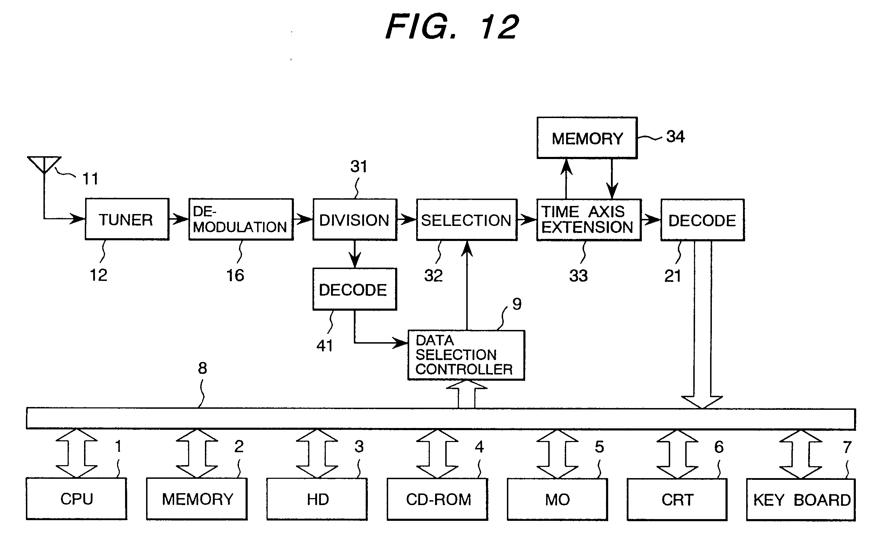

In Fig. 12, a seventh embodiment according to the present invention is shown. In those embodiments mentioned above respective scenes are selected by using the time information previously predetermined, of the scenes in the program information. However, according present embodiment, the scenes are selected by using the header information added to each scene, but not using the fixed time. In Fig. 12 showing the construction of the seventh embodiment, the reference numeral 31 denotes a circuit for dividing the signal from the modulator 16 into a header signal having a scene information, such as scene numbers, and an image signal. The image signal is fed to the following selection circuit 32, and the header signal to the decode circuit 41. In dividing of the signal, a specific data train is attached onto the front and/or rear portion of the header signal, and it is divided by detecting this, i.e., the attached specific data train.

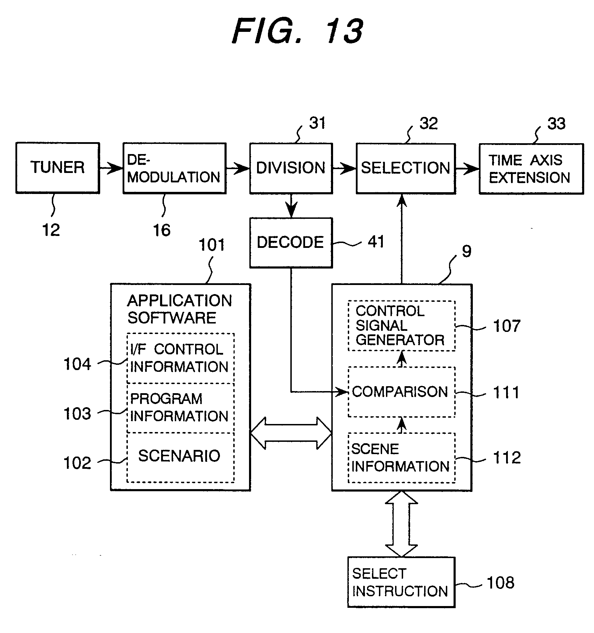

The detail of the data selection circuit (the data selection controller 8) is shown in Fig. 13. In this drawing, the reference numeral 112 denotes a circuit or software for generating the information of scenes for the next selection, such as scene numbers, on the basis of the information from the select instruction 108 which is input through the key-board 7. The reference numeral 111 denotes a circuit for comparing the scene information from the above-mentioned scene information circuit 112 and the scene information from the decode circuit 41. In the comparing circuit, if the comparison result is equal, it means the scene is that which selected, then the received image signals are selected on the control signal from the control signal generator 107, and the image is reproduced on the display.

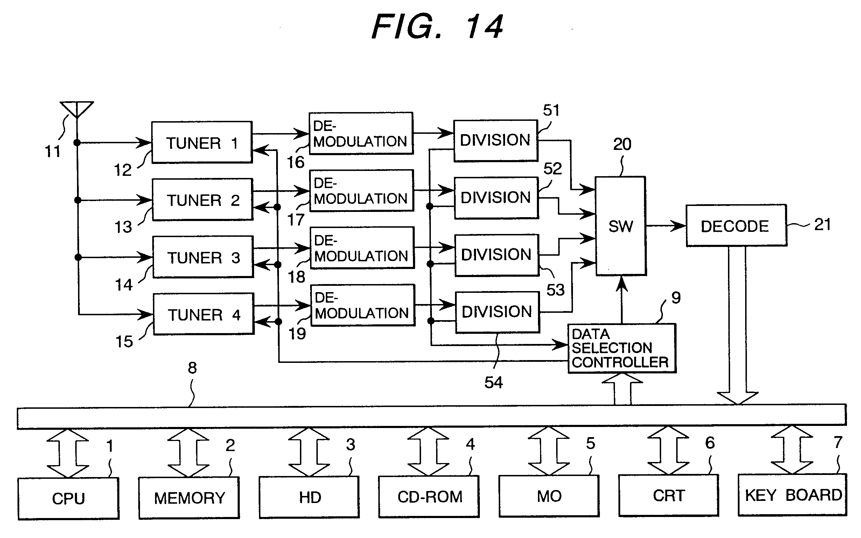

In the embodiment mentioned above, the image information is transmitted on a single channel, however, it can be transmitted by using a plurality of channels as shown in Fig. 14. In this embodiment shown in Fig. 14, the identification signal divided from the received signal of each channel with the dividers 51 to 53 is led to the data selection circuit (the data selection controller 8 and the switch SW 20). According to this embodiment, the identification signal of the scene which is selected by the user is compared to the received identification signal, and the received image signal which coincides with the identification signal is selected with the switch SW 20 so to be reproduced on the display.

In the explanation of those embodiments mentioned above, only examples of using the digital broadcast are shown, however, the present invention can be applied to the system in which the image data is transmitted through a cable television. Further, in the first through fourth embodiments, only the video information is transmitted, and in the fifth embodiment, the application software is also transmitted therewith. However, according to the present invention, variation is possible in that only a part of the application software, for example, the program information be transmitted with that combination.

According to the present invention, apparent form the above, the user is able to receive the desired scenes only by selecting the scenes in accordance with the operation instructions given by the application software so to automatically select the channel and the time for the broadcasting signal. Further, according to the present invention, because the image information is transmitted through the broadcasting, there is no limitation in the amount of the information for the programs and the respective scenes thereof, thereby, the user can enjoy various stories which can be developed by the option of the user.

## Claims

1. In a data transmitting method for transmitting an image information including video signal and/or audio signal(s) forming a scene, in form of digital signal, wherein a story is constructed with a series of plural interchangeable scenes, and an identification signal is added to each interchangeable scene for identification thereof, thereby the story being made changeable by using the identification signals attached thereto.

2. In a data transmitting method defined in claim 1, said plural interchangeable scenes are transmitted through a plurality of channels through which the image information of the digital form can be transmitted.

3. In a data transmitting method defined in claim 1, said plural interchangeable scenes are transmitted through a channel on time sharing mode.

4. A data receiving apparatus for receiving digital image information including video and/or audio signal(s) forming a scene in form of digital signal, a series of the plural scenes constructing a story, transferred on a plurality of channels, with an identification signal added to each scene as defined in claim 1, comprising:
channel selecting means for selecting a channel from said plurality of channels so as to selectively receive the image information forming the scenes;
user interface means for making the scenes inter changeable at user's option,
control means for controlling the operations of at least said channel selecting means and said user interface means by using the added identification signal;
means for reproducing the selectively received image information of the series of the plural scenes by said channel selecting means; and
display means for displaying reproduced image information of the series of the plural scenes from said reproducing means, thereby making changeable the story of the series of the plural scenes according to the user's desire through said user interface means.

5. A data receiving apparatus as defined in claim 4, wherein said control means further includes means for storing a scene information relating the transmitting channel and transmitting time thereof, and makes the scenes selective through said user interface means, on basis of the stored scene information including the transmitting channel and transmitting time.

6. A data receiving apparatus as defined in claim 5, wherein said control means further includes means for storing a scenario information relating contents of each scene for selection of the scenes by the user.

7. A data receiving apparatus as defined in claim 5, wherein said control means further includes means for storing a application software for use in the selection of the scenes by the user.

8. A data receiving apparatus for receiving digital image information including video and/or audio signal(s) forming a scene in form of digital signal, a series of the plural scenes constructing a story, transferred on a time sharing mode on a channel, with an identification signal added to each scene as defined in claim 1, comprising:
scene selecting means for selectively receive the image information forming the scenes from the channel;
user interface means for making the scenes interchangeable at user's option,
control means for controlling the operations of at least said scene selecting means and said user interface means by using the added identification signal;
means for reproducing the selectively received image information of the series of the plural scenes by said channel selecting means; and
display means for displaying reproduced image information of the series of the plural scenes from said reproducing means, thereby making changeable the story of the series of the plural scenes according to the user's desire.

9. A data receiving apparatus as defined in claim 8, wherein said control means further includes means for storing a scene information relating the transmitting channel and transmitting time thereof, and makes the scenes selective through said use interface means, on basis of the stored scene information including the transmitting channel and transmitting time.

10. A data receiving apparatus as defined in claim 9, wherein said control means further includes means for storing a scenario information relating contents of each scene for selection of the scenes by the user.

11. A data receiving apparatus as defined in claim 9, wherein said control means further includes means for storing a application software for use in the selection of the scenes by the user.
